# EUROPÄISCHE PATENTSCHRIFT

(11) **EP 0 404 898 B1**
(45) Veröffentlichungstag und Bekanntmachung des Hinweises auf die Patenterteilung: **12.05.1993**
(21) Anmeldenummer: 90900151.3
(22) Anmeldetag: 22.12.1989
(51) Int. Cl.: C21D 9/28, C21D 1/10, H05B 6/02

(54) **VORRICHTUNG ZUM OBERFLÄCHENHÄRTEN VON UNTERSCHIEDLICH LANGEN WERKSTÜCKEN**
DEVICE FOR HARDENING THE SURFACES OF WORKPIECES OF DIFFERENT LENGTHS
DISPOSITIF DE TREMPE SUPERFICIELLE DE PIECES A USINER DE LONGUEURS DIVERSES

(30) Priorität: 23.12.1988 DE 3843457
(43) Veröffentlichungstag der Anmeldung: 02.01.1991
(73) Patentinhaber: AEG - Elotherm GmbH, D-42855 Remscheid (DE)
(72) Erfinder: SCHWARZ, Hans-Rudolf, D-5632 Wermelskirchen 3 (DE); OERTEL, Friedrich, Moritz, D-5609 Hückeswagen (DE)
(74) Vertreter: Werner, Dietrich H., Dr.-Ing.
(86) Internationale Anmeldenummer: EP8901601
(87) Internationale Veröffentlichungsnummer: WO9007584

(56) Entgegenhaltungen:
- FR-A- 1 554 382
- FR-A- 1 554 383
- GB-A- 1 134 578
- US-A- 3 272 954

## Beschreibung

Die Erfindung betrifft eine Vorrichtung zum Härten der Oberfläche von unterschiedlich langen Werkstücken mit zwei Spannköpfen und einem Drehantrieb zum Einspannen und Drehen des zu härtenden Werkstücks sowie mit Induktoren zum elektroinduktiven Erhitzen der Werkstückoberfläche und einer Abschreckbrause.

Derartige elektroinduktive Härtevorrichtungen sind seit langem bekannt und gebräuchlich. Probleme treten dann auf, wenn nicht immer Werkstücke der gleichen Länge gehärtet werden sollen, sondern solche mit unterschiedlicher Länge. Da die Kanten der Werkstücke ungehärtet bleiben sollen, um die Gefahr von Kantenausbrüchen zu verringern, müssen die Induktoren genau auf die Länge des zu härtenden Werkstücks angepaßt sein. Beim Härten unterschiedlich langer Werkstücke mußte man daher jeweils die Induktoren wechseln und einen Induktor einsetzen, welcher der Länge des zu härtenden Werkstücks entsprach. Diese Betriebsweise erfordert einmal, daß entsprechend viele Induktoren auf Vorrat gehalten werden und daß die Umrüstzeit für die Produktion verlorengeht.

Der Erfindung liegt nun die Aufgabe zugrunde, einmal eine Vorrichtung zum elektroinduktiven Oberflächenhärten von Werkstücken zu schaffen, bei der die Umrüstzeit für die Anpassung der Induktoren an die jeweilige Länge des zu härtenden Werkstücks verkürzt und insbesondere ein Induktorwechsel und damit die dafür benötigte Zeit eingespart werden kann.

Zur Lösung der gestellten Aufgabe wird bei einer gattungsgemäßen Vorrichtung erfindungsgemäß vorgeschlagen, daß zwei Linieninduktoren mit parallelen Leiterabschnitten und mit jeweils rechtwinklig abgewinkelten Endabschnitten von denen ein Endabschnitt bogenförmig oder polygonal, insbesondere rechteckig, über das Werkstück geführt ist, an gegenüberliegenden Seiten des Werkstücks in Richtung von dessen Achse in Anpassung an die jeweilige Werkstücklänge relativ zueinander verschiebbar angeordnet sind.

Durch das nach der Erfindung mögliche Verstellen der beiden parallel zueinander angeordneten, das Werkstück zwischen sich aufnehmenden Linieninduktoren kann in ganz einfacher Weise eine Anpassung an die jeweilige Werkstücklänge vorgenommen werden, ohne daß ein Induktorwechsel erforderlich wird. Die Verschiebung der Linieninduktoren, z.B. über Schiebeleisten von Hand, über Spindeln, oder bei großen vollautomatischen flexiblen Härtemaschinen über NC-gesteuerte Achsen, erfolgt dabei jeweils so weit, bis die bogenförmigen oder polygonalen Endabschnitte der beiden Linieninduktoren kurz vor der jeweiligen Endfläche des Werkstücks liegen. Dabei kann entweder nur ein Linieninduktor gegenüber dem anderen ortsfesten verschoben werden, oder es werden beide Linieninduktoren gegeneinander verschoben.

Die Verschiebung kann in Richtung der Längserstreckung der Leiterabschnitte unter Beibehaltung ihres gegenseitigen Abstandes erfolgen.

Zur Anpassung an Werkstücke mit unterschiedlichem Durchmesser ist bei der erfindungsgemäßen Vorrichtung auch eine Verschiebung der beiden Linieninduktoren zueinander, d.h. quer zur Achse des Werkstücks möglich.

Wenn gemäß einer vorteilhaften Ausgestaltung der erfindungsgemäßen Vorrichtung jedem Linieninduktor ein Transformator zugeordnet ist, so läßt sich eine Baueinheit aus Linieninduktor mit zugehörigem Transformator als komplette verschiebbare Einheit ausbilden.

Bevorzugt wird es ferner, daß beide Transformatoren von einer einzigen Stromquelle gespeist werden.

Die erfindungsgemäße Vorrichtung eignet sich für Wellen, Gelenkwellen, Zahnstangen und andere langgestreckte Motoren-und Maschinenteile.

Anhand der Zeichnung wird die Erfindung näher erläutert.
- Figur 1: zeigt die beiden Linieninduktoren perspektivisch in einer Arbeitsstellung und
- Figur 2: in einer veränderten Arbeitsstellung,
- Figur 3: zeigt einen Längsschnitt der Induktoreneinheit.
- Figur 4: zeigt das Schaltschema des Stromkreises der beiden Linieninduktoren.

Jeder der beiden gleichgeformten Linieninduktoren 1a,1b weist einen geraden Leiterabschnitt 2a,2b auf, der sich parallel zur Achse 3 der Werkstücks 4 erstreckt. Die beiden geraden Leiterabschnitte 2a,2b sind an gegenüberliegenden Seiten des Werkstücks 4 angeordnet, nehmen also das zu härtende Werkstück 4 in ihre Mitte. Ein Endabschnitt 5a,5b der Linieninduktoren 1a,1b ist im rechten Winkel glatt abgewinkelt, während der gegenüberliegende Endabschnitt 6a,6b das Werkstück 4 bogenförmig teilweise umfaßt. Wie gesagt kann dieser Endabschnitt 6a,6b auch polygonal, d.h. vieleckig, sein.

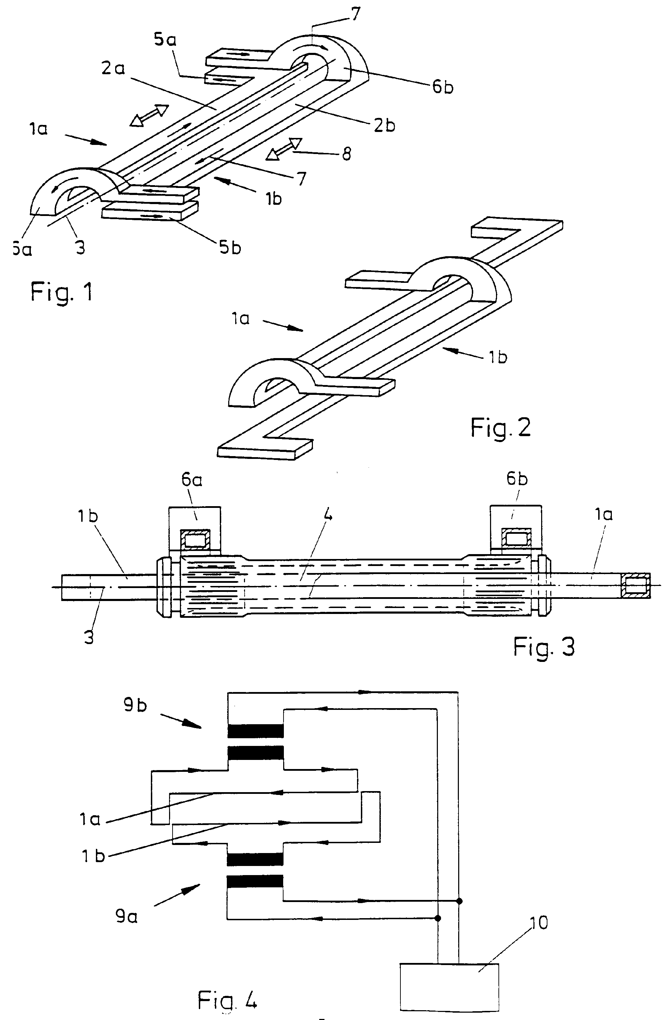

Aus der in Figur 1 dargestellten Arbeitsstellung sind die beiden Linieninduktoren 1a,1b in den als Doppelpfeil 8 gekennzeichneten entgegengesetzten Richtungen parallel zur Achse 3 des Werkstücks 4 verschiebbar, beispielsweise in die in Figur 2 dargestellte Arbeitsstellung, um ein kürzeres Werkstück 4 zu härten.

Jedem Linieninduktor 1a,1b ist gemäß Figur 4 ein Transformator 9a,9b zugeordnet. Beide Transformatoren 9a,9b sind an eine gemeinsame Stromquelle 10 angeschlossen. Die Stromrichtung in den Linieninduktoren 1a,1b ist durch Pfeile 7 markiert.

## Patentansprüche

1. Vorrichtung zum Härten der Oberfläche von unterschiedlich langen Werkstücken mit zwei Spannköpfen und einem Drehantrieb zum Einspannen und Drehen des zu härtenden Werkstücks sowie mit Induktoren zum elektroinduktiven Erhitzen der Werkstückoberfläche und einer Abschreckbrause,
**dadurch gekennzeichnet,** daß zwei Linieninduktoren (1a,1b) mit parallelen Leiterabschnitten (2a,2b) und mit jeweils rechtwinklig abgewinkelten Endabschnitten (5,6), von denen jeweils ein Endabschnitt (6a,6b) bogenförmig oder polygonal, insbesondere rechteckig, über das Werkstück (4) geführt ist, an gegenüberliegenden Seiten des Werkstücks in Richtung von dessen Achse in Anpassung an die jeweilige Werkstücklänge relativ zueinander verschiebbar angeordnet sind.

2. Vorrichtung nach Anspruch 1,
**dadurch gekennzeichnet,** daß die Linieninduktoren (1a,1b) in Richtung der Längserstreckung der Leiterabschnitte (2a,2b) unter Beibehaltung ihres gegenseitigen Abstandes relativ zueinander verschiebbar sind.

3. Vorrichtung nach Anspruch 1,
**dadurch gekennzeichnet,** daß die Leiterabschnitte (2a,2b) unter Veränderung ihres gegenseitigen Abstandes in Anpassung an den Durchmesser des Werkstücks (4) in dessen Achsrichtung relativ zueinander verschiebbar sind.

4. Vorrichtung nach einem der Ansprüche 1 bis 3,
**dadurch gekennzeichnet,** daß die beiden Linieninduktoren 1a,1b) über je einen Transformator (9a,9b) an eine Stromquelle (10) angeschlossen sind.

## Claims

1. A device for hardening the surface of workpieces of different lengths, the device having two clamping heads and a rotary drive for the clamping and rotation of the workpiece to be hardened, and also inductors for the electroinductive heating of the workpiece surface and a quenching spray, characterized in that two line inductors (1a, 1b) each having parallel conductor portions (2a, 2b) and end portions (5, 6) which are bent at right angles and at each of which an end portion (6a, 6b) extends arcuately or polygonally, more particularly at right angles, over the workpiece (4), are disposed on opposite sides of the workpiece displaceably in relation to one another in the direction of its axis in adaptation to the particular workpiece length.

2. A device according to claim 1, characterized in that the line inductors (1a, 1b) are displaceable in relation to one another in the direction of the longitudinal extension of the conductor portions (2a, 2b) while maintaining their mutual distance.

3. A device according to claim 1, characterized in that the conductor portions (2a, 2b) are displaceable in relation to one another in the direction of the axis of the workpiece (2) in adaptation to the diameter thereof while changing their mutual distance.

4. A device according to one of claims 1 to 3, characterized in that the two line inductors (1a, 1b) are each connected via a transformer (9a, 9b) to a current source (10).

## Revendications

1. Dispositif pour la trempe de la surface de pièces d'oeuvre de longueurs différentes avec deux têtes de serrage et un entraînement en rotation pour le serrage et la rotation de la pièce d'oeuvre à tremper ainsi qu'avec des inducteurs pour le chauffage électro-inductif de la surface des pièces d'oeuvre et une douche de trempe,
caractérisé en ce que deux inducteurs linéaires (1a, 1b) à sections conductrices (2a, 2b) parallèles et avec respectivement des sections terminales (5, 6) repliées à angle droit, dont une section terminale (6a, 6b) en forme d'arc ou polygonale, en particulier rectangulaire, est guidée respectivement au-dessus de la pièce d'oeuvre (4), sont montés déplaçables en translation l'un par rapport à l'autre sur des faces opposées de la pièce d'oeuvre, en direction de son axe, en adaptation à la longueur respective de la pièce d'oeuvre.

2. Dispositif selon la revendication 1,
caractérisé en ce que les inducteurs linéaires (1a, 1b) peuvent être déplacés en translation l'un par rapport à l'autre en direction de l'étendue longitudinale des sections conductrices (2a, 2b) avec conservation de leur écartement relatif.

3. Dispositif selon la revendication 1,
caractérisé en ce que les sections conductrices (2a, 2b) peuvent être déplacées en translation l'une par rapport à l'autre avec modification de leur écartement relatif en adaptation au diamètre de la pièce d'oeuvre (4), dans sa direction axiale.

4. Dispositif selon l'une des revendications 1 à 3,
caractérisé en ce que les deux inducteurs linéaires (1a, 1b) sont reliés à une source de courant (10) chacun par l'intermédiaire d'un transformateur (9a, 9b).
